(19) Europäisches Patentamt

European Patent Office

Office européen des brevets

(11) **EP 1 459 256 B1**

(12) **EUROPEAN PATENT SPECIFICATION**

(45) Date of publication and mention
of the grant of the patent:
**04.10.2006 Bulletin 2006/40**

(51) Int Cl.:
***G06T 1/00*** (2006.01)

(21) Application number: **02804973.2**

(86) International application number:
**PCT/IB2002/004898**

(22) Date of filing: **20.11.2002**

(87) International publication number:
**WO 2003/052689 (26.06.2003 Gazette 2003/26)**

(54) **EMBEDDING AND EXTRACTION OF WATERMARK DATA**

EINBETTUNG UND EXTRAKTION VON WASSERZEICHENDATEN

ENFOUISSEMENT ET EXTRACTION DE DONNEES

(84) Designated Contracting States:
**AT BE BG CH CY CZ DK EE ES FI FR GB GR
IE IT LI LU MC NL PT SE SK TR**

(30) Priority: **14.12.2001 EP 01204888**

(43) Date of publication of application:
**22.09.2004 Bulletin 2004/39**

(73) Proprietors:
• **Koninklijke Philips Electronics N.V.
5621 BA Eindhoven (NL)**
Designated Contracting States:
**AT BE BG CH CY CZ DK EE ES FI FR GB GR IE IT
LI LU MC NL PT**
• **Philips Corporate Intellectual Property GmbH
52066 Aachen (DE)**
Designated Contracting States:
**DE**

(72) Inventors:
• **EGGERS, Joachim, J.
NL-5656 AA Eindhoven (NL)**
• **BAEUML, Robert
NL-5656 AA Eindhoven (NL)**

(74) Representative: **Schmitz, Herman Jan Renier
Philips
Intellectual Property & Standards
P.O. Box 220
5600 AE Eindhoven (NL)**

(56) References cited:

• **EGGERS J J ET AL: "Performance of a practical
blind watermarking scheme" SECURITY AND
WATERMARKING OF MULTIMEDIA CONTENTS
III, SAN JOSE, CA, USA, 22-25 JAN. 2001, vol.
4314, pages 594-605, XP008020740 Proceedings
of the SPIE - The International Society for Optical
Engineering, 2001, SPIE-Int. Soc. Opt. Eng, USA
ISSN: 0277-786X**
• **CHEN B ET AL: "Provably robust digital
watermarking" MULTIMEDIA SYSTEMS AND
APPLICATIONS II, BOSTON, MA, USA, 20-22
SEPT. 1999, vol. 3845, pages 43-54, XP002250351
Proceedings of the SPIE - The International
Society for Optical Engineering, 1999, SPIE-Int.
Soc. Opt. Eng, USA ISSN: 0277-786X**
• **VOLOSHYNOVSKIY S ET AL: "Attack modelling:
towards a second generation watermarking
benchmark" SIGNAL PROCESSING,
AMSTERDAM, NL, vol. 81, no. 6, June 2001
(2001-06), pages 1177-1214, XP004241222 ISSN:
0165-1684**
• **CHEN B ET AL: "Preprocessed and
postprocessed quantization index modulation
methods for digital watermarking" SECURITY
AND WATERMARKING OF MULTIMEDIA
CONTENTS II, SAN JOSE, CA, USA, 24-26 JAN.
2000, vol. 3971, pages 48-59, XP002250352
Proceedings of the SPIE - The International
Society for Optical Engineering, 2000, SPIE-Int.
Soc. Opt. Eng, USA ISSN: 0277-786X**
• **CHEN B ET AL: "Quantization index modulation:
a class of provably good methods for digital
watermarking and information embedding" IEEE
TRANSACTIONS ON INFORMATION THEORY,
MAY 2001, IEEE, USA, vol. 47, no. 4, pages
1423-1443, XP002250353 ISSN: 0018-9448**

**Description**

FIELD OF THE INVENTION

The invention relates to a method and system for extracting data from a host signal. The invention also relates to a method and system for embedding data in a host signal, and to a signal with embedded data.

BACKGROUND OF THE INVENTION

Blind watermarking is the art of embedding a message into a multimedia host signal, and decoding the message without access to the original, non-watermarked host signal. An example of such a watermarking scheme is disclosed in B. Chen and G.W. Wornell: "Quantization Index Modulation: A Class of Provably Good Methods for Digital Watermarking and Information Embedding", published in IEEE Transactions on Information Theory, Vol. 47, No. 4, May 2001. The known watermarking scheme is a quantization based watermarking scheme. The message is embedded the host signal by quantization of the host signal using a quantization step size which maps an input sample into an output sample which uniquely identifies a message symbol embedded in the output sample.

It has been shown in literature that blind watermarking withstands additive white Gaussian noise (AWGN) attacks as well as if the decoder had access to the original host signal. However, in practical watermarking applications, attacks are not constrained to AWGN attacks. A particularly interesting class of attacks is amplitude modification. This class of attacks includes scaling of the watermarked signal, e.g. contrast reduction for image data, or addition of a constant DC value. Unlike spread-spectrum watermarking schemes, which are typically believed to survive such attacks without significant losses, quantization based watermarking schemes are vulnerable against amplitude modifications. This problem is particularly significant in quantization based watermarking schemes that also use dithering. Dithering is the process of assigning different offsets to different samples of the watermarked signals so as to avoid that the embedded data can be detected by simply inspecting the structure of the watermarked signal. The series of dither values ("dither vector") is a secret key which is known to the receiver. Without knowledge of the dither vector, the message can impossibly be reliably extracted.

In "Performance of a Practical Blind Watermarking Scheme" (Jan. 2001), Eggers, J.J., et al., Proceedings of the SPIE - The International Society for Optical Engineering, vol. 4314, pp. 594-605, discloses a method and system of embedding data symbols in a host signal by quantizing said host signal using a quantization step size ($\delta$), and dithering the quantized signal in accordance with a dither vector ($k_n$), wherein a sequence of data symbols is embedded in the sequence of samples of the host signal.

OBJECT AND SUMMARY OF THE INVENTION

It is an object of the invention to provide a method and system for extracting the data even if the amplitude of the watermarked signal has been modified.

In accordance with the invention, this is achieved by computing the quantizer step size of the received media signal from a histogram of selected signal samples having a predetermined range of dither values. The invention exploits the insight that in case of an amplitude scaling attack, the quantizer step size used by the watermark embedding algorithm has been scaled by the same factor. With the invention is achieved that the amplitude scaling factor can be calculated (or at least estimated) as the ratio of the step size computed by the decoder to the step size used by the embedder. This allows the received watermark signal to be re-scaled, and the embedded message to be extracted from the re-scaled signal by a conventional decoder. An embodiment of the decoder extracts the embedded message on the basis of the computed quantizer step size even if the original quantizer step size (and thus the scaling factor) is unknown.

In a preferred embodiment, the selected signal samples are predetermined signal samples in which a predetermined data symbol has been embedded. This embodiment requires knowledge of the samples having the predetermined data symbol embedded therein. To this end, an embedder in accordance with the invention embeds said predetermined data symbol in predetermined samples of the host signal.

BRIEF DESCRIPTION OF THE DRAWINGS

Fig. 1 shows a schematic diagram of a system comprising a data embedder, a channel and a data detector.
Figs. 2 and 3 show diagrams to illustrate data embedding using the concept of dithered quantization index modulation.
Figs. 4 and 5 show schematic diagrams of a data embedder and extractor, respectively.
Figs. 6, 7A and 7B show diagrams to illustrate data extraction.

Fig. 8 shows a diagrams to illustrate data extraction in the system which is shown in Fig. 1.

Fig. 9 shows a diagram to illustrate the operation of an embodiment of the data extractor in accordance with the invention.

Fig. 10 shows a diagram to illustrate the operation of a further embodiment of the data extractor in accordance with the invention,

Fig. 11 shows a schematic diagram of a system comprising a data embedder and a data decoder in accordance with the invention,

Fig. 12 shows a schematic diagram of a system comprising a data embedder and a further embodiment of a data decoder in accordance with the invention, ,

Fig. 13 shows a diagram to illustrate the operation of an embodiment of a histogram analysis circuit which is shown in Figs. 11 and 12.

## DESCRIPTION OF EMBODIMENTS

We consider digital watermarking as a communication problem. A watermark message is encoded into a sequence of watermark letters or symbols $d_n$. The elements $d_n$ belong to a D-ary alphabet {0,1,...,D-1} of size D. In many practical cases, binary watermark symbols (D=2) will be used.

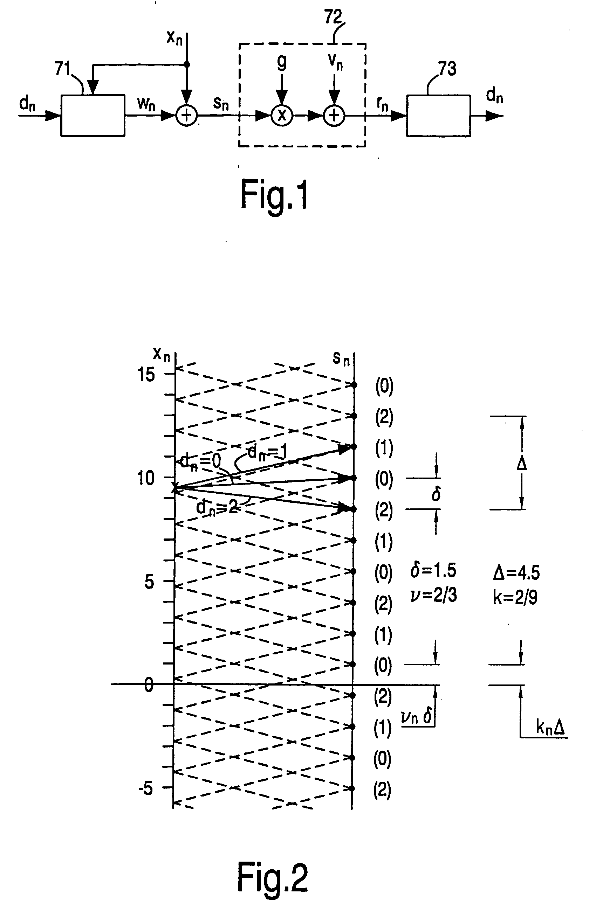

Fig. 1 shows a general schematic diagram of a system comprising a watermark embedder (or encoder) **71** and a detector (or decoder) **73**. The watermark encoder derives from the encoded watermark message d and the host data x an appropriate watermark sequence w, which is added to the host data to produce the watermarked data s. The watermark w is chosen to be such that the distortion between x and s is negligible. The decoder **73** must be able to detect the watermark message from the received data r. Fig. 1 shows a "blind" watermarking scheme. This means that the host data x are not available to the decoder **73**. The codebook used by the watermark encoder and decoder is randomized dependent on a secure key k to achieve secrecy of watermark communication. The signals x, w, s, r and k are vectors of identical length. The index n in Fig. 1 refers to their respective n$^{th}$ elements (or samples).

In practice, the watermarked signal has undergone signal processing, passed through a communication channel, and/or it has been the subject of an attack. This is shown in Fig. 1 as an attack channel **72** between embedder **71** and detector **73**. The attack scales the amplitude of the watermarked signal s with a factor g (usually g<1), and adds noise v. The channel may also introduce an additional offset $r_{offset}$ in the attacked signal r. The receiver can compensate for scaling by dividing the attacked signal r by g to produce s+v/g. Accordingly, the design of watermark encoder **71** and detector **73** can be translated into the design of a system which needs to withstand noise only, provided that the scale factor g is known to the receiver.

In general, the watermark encoder **71** and decoder **72** involve a random codebook that is available at both ends. In the encoder **71,** the codebook maps an input sample $x_n$ onto an output sample $s_n$, the output sample value being dependent on the message symbol $d_n$ and the key $k_n$. The decoder **73** uses the same codebook to reconstruct the message symbol $d_n$ from the sample $s_n$. Sub-optimal but more practical versions of the system are based on dithered uniform scalar quantization as will be explained hereinafter.

In the simplest form of scalar quantization, message data is embedded in the media signal by quantizing the signal samples $x_n$ (all samples or selected ones) to a selected one of a number of sets of discrete levels, the selected set being determined by the data symbol to be embedded. This simplest form of watermark embedding is illustrated in Fig. 2. In this Figure, the left vertical axis represents a range of values that signal samples $x_n$ of a media signal x can assume. The message to be embedded in the media signal is encoded into a sequence of data elements $d_n$ belonging to a D-ary alphabet D∈ {0,1,..D-1}. In Fig. 2, a ternary alphabet (D=3) is illustrated by way of general example. In practical systems, D=2 will often be used. The signal media samples $x_n$, one of which is indicated by the symbol **X** on the left vertical axis in the Figure, is rounded to the nearest multiple of $(Dm+d_n)×δ$, where δ is a given quantization step and m=...,-2,-1,0,1,2,... The quotient $x_n/δ$, known as quantization index, is modulated with the data to be embedded. Low-bit modulation, a well-known data embedding technique, is a special case. Low-bit modulators simply replace the least significant bit of digital signal samples $x_n$ by a data bit $d_n$.

The data accommodated in the watermarked signal can easily be detected by inspecting the discrete signal values $s_n$. In low-bit modulation schemes, it even suffices to inspect the least significant bit of $s_n$. If it is 0, then $d_n$=0. If it is '1', then $d_n$=1. In order to provide secure transmission of the message, different offsets are assigned to different output signal samples $s_n$. This is referred to as dithering. In Fig. 2, the offset is denoted $v_nδ$, where $v_n$ is a multiplication factor. The set of dither values $v_n$ used to embed data in the sequence of signal samples $x_n$ constitutes a secure dither vector, also referred to hereinafter as secret key. Without knowledge of this key, no structure is visible in the samples $s_n$, and it is not possible to detect the data message.

A mathematical expression of the dithered uniform scalar quantization embedding process can be derived as follows. The output signal $s_n$ can be written as:

$$s_n = (Dm + d_n) \times \delta + v_n \delta \qquad (1)$$

The value $s_n$ must be as close as possible to the input value $x_n$, which can be expressed as:

$$x_n \cong s_n$$

$$x_n \cong (Dm + d_n) \times \delta + v_n \delta$$

$$m \cong \frac{x_n - (d_n + v_n) \times \delta}{D\delta}$$

This condition is fulfilled if

$$m = \text{round}\left\{\frac{x_n - (d_n + v_n) \times \delta}{D\delta}\right\} \qquad (2)$$

Substitution of (2) in (1) yields:

$$s_n = D\delta \times \text{round}\left\{\frac{x_n - (d_n + v_n) \times \delta}{D\delta}\right\} + (d_n + v_n) \times \delta \qquad (3)$$

An alternative expression can be obtained by introducing $\Delta = D\delta$ and $k_n = \dfrac{v_n}{D}$, and denoting the operation

$\Delta \times \text{round}\left\{\dfrac{\bullet}{\Delta}\right\}$ by an operator $Q_\Delta \{\bullet\}$ to. The latter operator denotes conventional scalar uniform quantization with

step size $\Delta$, hence the name of this practical embedding scheme. The data embedding process can now be expressed as:

$$s_n = Q_\Delta\left\{x_n - \Delta\left(\frac{d_n}{D} + k_n\right)\right\} + \Delta\left(\frac{d_n}{D} + k_n\right) \qquad (4)$$

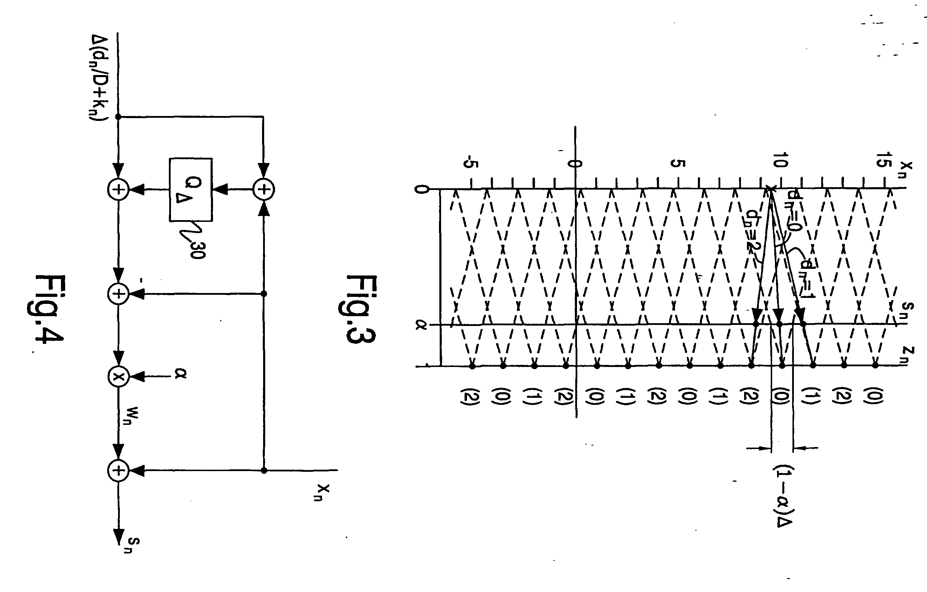

The data embedding process can even be more generalized. It is not necessary to project $x_n$ on discrete <u>points</u> of the $s_n$-axis. The data symbols $d_n$ may equally be represented by distinct <u>ranges</u> of values $s_n$, as has been shown in Fig. 3. It can easily be derived from this Figure that the output signal $s_n$ can now be described as:

$$s_n = x_n + \alpha(z_n - x_n)$$

where $z_n$ denotes the discrete points as defined above by equation (4). Accordingly,

$$s_n = x_n + \alpha \times \left( Q_\Delta \left\{ x_n - \Delta \left( \frac{d_n}{D} + k_n \right) \right\} + \Delta \left( \frac{d_n}{D} + k_n \right) - x_n \right) \qquad (5)$$

Fig. 4 shows a schematic diagram of the embedder 71 in accordance with equation (5). Herein, reference numeral 30 denotes a scalar uniform quantizer with step size $\Delta = D\delta$.

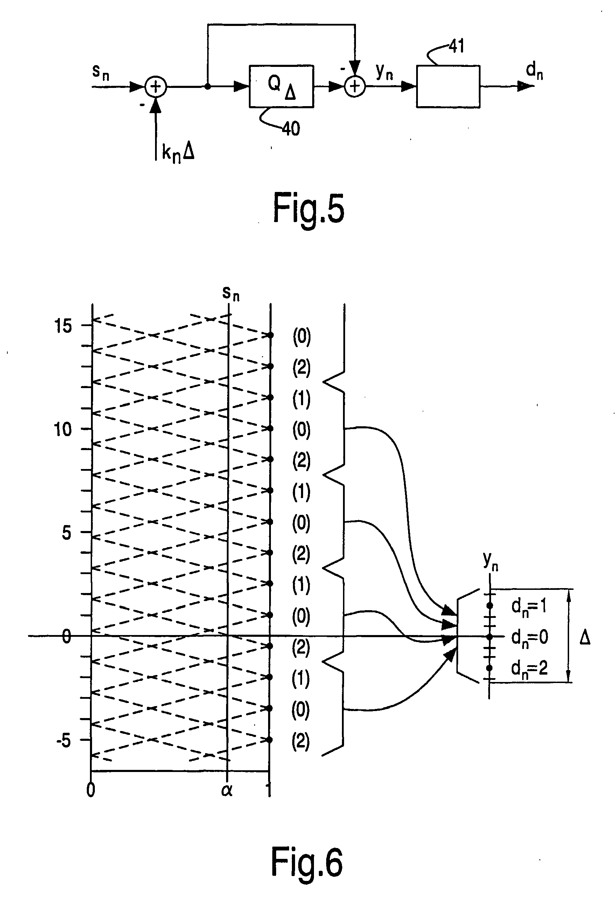

Fig. 5 shows a schematic diagram of the detector 73 for extracting the data message bits $d_n$ from the signal samples $s_n$. In this Figure, reference numeral 40 denotes the same scalar uniform quantizer with step size $\Delta$ as quantizer 30 in Fig. 4. The detector generates an intermediate signal $y_n$ in accordance with the following mathematical operation:

$$y_n = Q_\Delta \{ s_n - k_n \Delta \} - ( s_n - k_n \Delta ) \qquad (6)$$

As illustrated in Fig. 6, this operation causes the samples $s_n$ to be shifted to a range

$$-\frac{\Delta}{2} < y_n < +\frac{\Delta}{2}$$

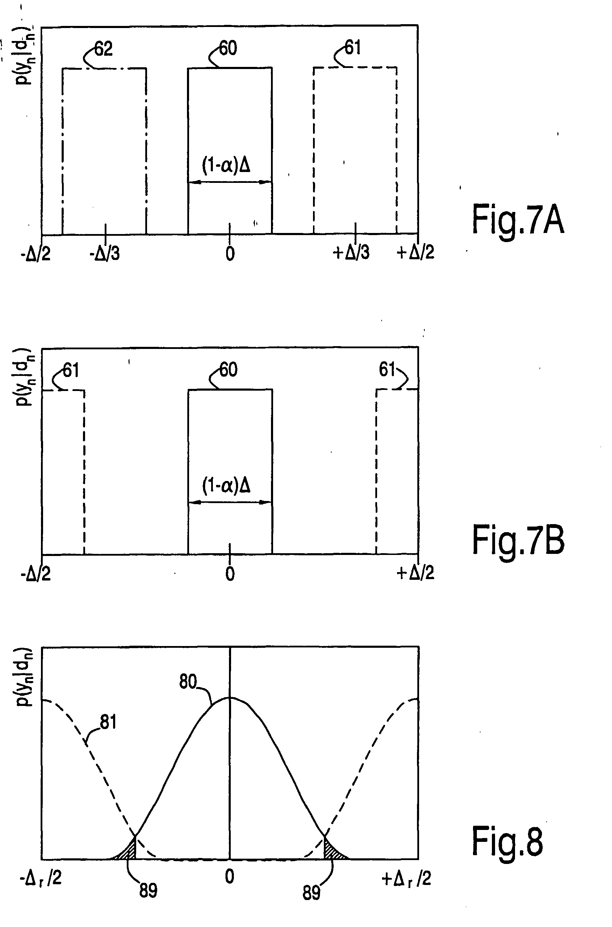

Fig. 7A shows the probability density function (PDF) of the intermediate signal samples $y_n$ conditioned on the transmitted symbol $d_n$ for D=3. More particularly, a solid line 60 denotes the PDF $p(y_n|d_n=0)$ of the watermarked elements conditioned on the watermarked symbol $d_n=0$, a dashed line 61 denotes $p(y_n|d_n=1)$, and a dot- and dash-line 62 shows $p(y_n|d_n=2)$. For comparison and completeness, Fig. 7B shows the PDF of $y_n$ for D=2, which is more likely to be used in practical systems. Herein, numerals 60 and 61 denote the PDFs for $d_n=0$ and $d_n=1$, respectively.

Figs. 7A and 7B show that the data symbol $d_n$ can easily be reconstructed from $y_n$ by an appropriate slicing and decoding circuit. The latter circuit is denoted 41 in Fig. 5. For D=3, this circuit checks whether $y_n$ is sufficiently close to 0, $+\Delta/3$ or $-\Delta/3$ (cf. Fig. 7A). For D=2, it checks whether $y_n$ is sufficiently close to 0 or $\pm\Delta/2$ (cf. Fig. 7B).

It should be noted that the schematic diagrams of the embedder and detector shown in Figs. 4 and 5 are physical implementations of the mathematical equations (5) and (6), respectively. Other practical embodiments are possible. For example, the detector may be designed to implement the following equation:

$$d = \text{mod}\left( \text{round}\left\{ \frac{s_n - v_n \delta}{\delta} \right\}, D \right) \qquad (7)$$

Equation (7) can be understood if it is considered that

$$m = \text{round}\left\{ \frac{s_n - v_n \delta}{\delta} \right\}$$

is the number of times step size $\delta$ fits into $s_n - v_n\delta$ (see Fig. 1), and $d_n = \text{mod}(m,D)$.

In any case, reliable detection requires that besides the secure key $k_n$ (or $v_n$) also the step size $\Delta$ (or $\delta$) is known. However, as has been shown in Fig. 1, an attack 72 may have been applied to the watermarked signal. Fig. 8 shows the PDF of the detector's intermediate signal $y_n$ (see Eq. 7) for D=2 in the case of an attack with additive white Gaussian noise (AWGN) v and scaling factor g. In a similar manner as in Fig. 7B, a solid line 80 denotes the PDF $p(y_n|d_n=0)$ conditioned on the watermarked symbol $d_n=0$, and a dashed line 81 denotes $p(y_n|d_n=1)$ conditioned on the watermarked symbol $d_n=1$. The hatched areas 89 represent the error probability (detection of $d_n=1$ where $d_n=0$ was embedded). The embedder system's parameters $\alpha$ and $\Delta$ have been chosen to be such that a desired error probability is achieved for a given noise variance $\sigma_v^2$ of the noise v. The inventors have found that a good approximation is given by:

$$\Delta_{opt} = \sqrt{12\left(\sigma_w^2 + 2.71\sigma_v^2\right)} \text{ and } \alpha_{opt} = \sqrt{\frac{\sigma_w^2}{\sigma_w^2 + 2.71\sigma_v^2}}$$

where $\sigma_w^2$ represents the embedding distortion.

It should be recalled that generation of the intermediate signal $y_n$ requires knowledge of the quantizer step size and the secure key $k_n$. The quantizer step size of the attacked signal r, which is now $\Delta_r = g\Delta$ due to the scaling by the factor g, has to be estimated from the received data r. Note that estimation of $\Delta_r$ is equivalent to estimation of g when $\Delta$ is known. Here, the more general point of view is taken, and estimation of $\Delta_r$ is considered.

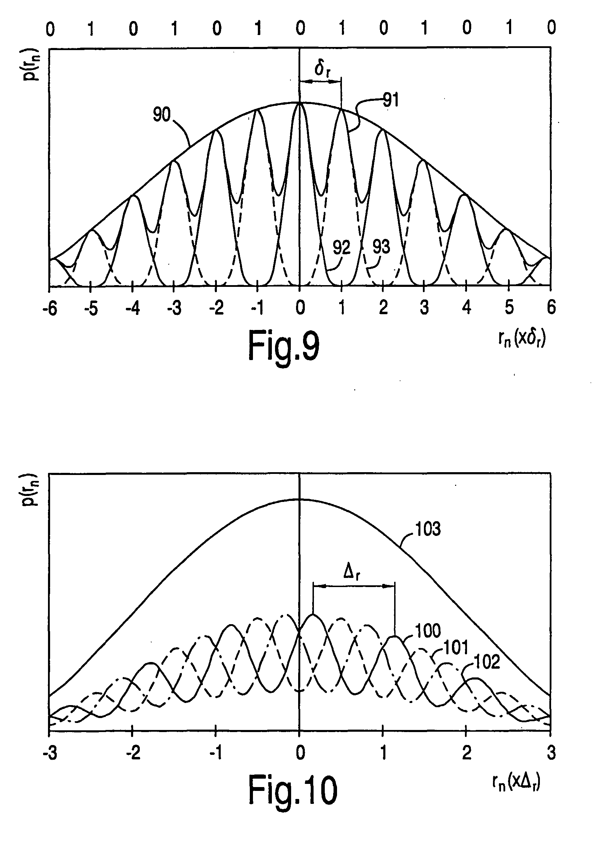

An estimation of $\Delta_r$ (and an estimation of the offset $r_{offset}$, if any), can be obtained by analyzing a histogram of received samples $r_n$. However, as mentioned before, dithering has been applied to avoid that the embedded data can be easily detected by simply inspecting the signal samples. Because of the dithering, there is no structure in the received samples. The histogram of received samples is more or less a continuous graph in practice. Fig. 9 shows such a histogram **90** by way of example.

Recall that dithering has been created by assigning offsets $k_n\Delta$ (or $v_n\delta$) to the samples $s_n$. Due to the scaling by the factor g, the offsets of the received samples $r_n$ are $k_n\Delta_r$ (or $v_n\delta_r$). These offsets are unknown at the receiver end because g is unknown. The key $k_n$, however, is known. Therefore, in accordance with one aspect of the invention, the histogram is derived from only those samples that have a given predetermined key value $k_n$ assigned thereto. Reference numeral **91** in Fig. 9 is an example of a histogram of samples for which $k_n=0$. The relative distance between the local maxima of the histogram is the step size $\delta_r = \Delta_r/D$. The Figure also illustrates the individual histograms **92** and **93** of samples with embedded data symbols d=0 and d=1, respectively, that collectively constitute the histogram (D=2 is assumed here; the data symbols d associated with the signal samples r are shown at the top of Fig. 9). The "pulse width" of the histogram depends on the embedder's parameter $\alpha$ (which spreads an input value over a range of output values) and the noise variance $\sigma_v^2$ of the attack channel.

Creating a statistically reliable histogram from only those samples that have a given predetermined key $k_n$ assigned thereto requires a large number of samples having that key to be collected. This may take a too long time. This disadvantage is mitigated in an embodiment in which one or more histograms are created for signal samples with keys $k_n$ in a range:

$$\frac{m}{M} \le k_n < \frac{m+1}{M}, \text{ for } m \in \{0,1,\ldots,M\text{-}1\} \text{ and } M>1. \tag{8}$$

The histograms (or histograms) thus obtained will show wider peaks with the relative distance $\delta_r$. Moreover, the peaks are shifted to the right because the offset ranges are positive.

In a further embodiment, the histogram is created from samples $r_n$ having a predetermined data symbol $d_n$ embedded therein. Such an embodiment has the advantage that the peaks will have a larger relative distance $\Delta_r$ (D times the distance $\delta_r$ of the previous embodiment), and larger maximum-to,minimum ratios. This embodiment allows the step size $\Delta_r$ to be calculated more accurately. In order to render it possible that the receiver can select samples having the predetermined data symbol, the embedder is arranged to embed a "pilot" sequence of said data symbols in the signal. The predetermined pilot symbol, further referred to as $d_{pilot}$, is one of the available data symbols {0,1,..D-1}, for example $d_{pilot}=0$. The pilot sequence is dithered like the normal signal samples and thus securely embedded. Without knowing the secure key k, no structure in the watermarked signal is visible.

The pilot sequence can be accommodated in the signal, inter alia, by embedding a pilot symbol $d_{pilot}$ in every $k^{th}$ sample of the input signal, or by (preferably repeatedly) inserting a fixed-length series of pilot symbols in the embedded message. Relevant to the invention is only that the receiver knows which samples $r_n$ have an embedded pilot symbol. As far as histogram analysis is concerned, only the samples $r_n$ having the embedded pilot symbol will be considered hereinafter.

Again, the histogram is generated from those samples having a given predetermined key value $k_n$ (for example, $k_n=0$) or a predetermined range of key values as defined by equation (8). Fig. 10 shows a histogram **100** of the pilot sequence for D=2, $d_{pilot}=0$, and range index m=0 (i.e. $0 \le k_n < 0.33$). The peaks now have a relative distance $\Delta_r$. Note that

the local maxima are shifted to the right compared with histogram **91** in Fig. 9, because a range of positive offsets $k_n\Delta_r$ has been taken into consideration. A possibly different shift must necessarily have been introduced by the attack channel in the form of an offset $r_{offset}$. Said offset can thus be computed from the histogram **100** too.

The histogram **100** is derived from one third of the pilot samples (M=3). Similar histograms can be derived for m=1 ($0.33 \leq k_n < 0.67$) and m=2 ($0.67 \leq k_n < 1$), so that all samples of the pilot sequence are taken into account for the histogram analysis. They are denoted **101** and **102** in Fig. 10. Note that the sum of the histograms **100, 101,** and **102** is the histogram of all samples of the pilot sequence, irrespective of their key value $k_n$. This total histogram is denoted **103** in Fig. 10.

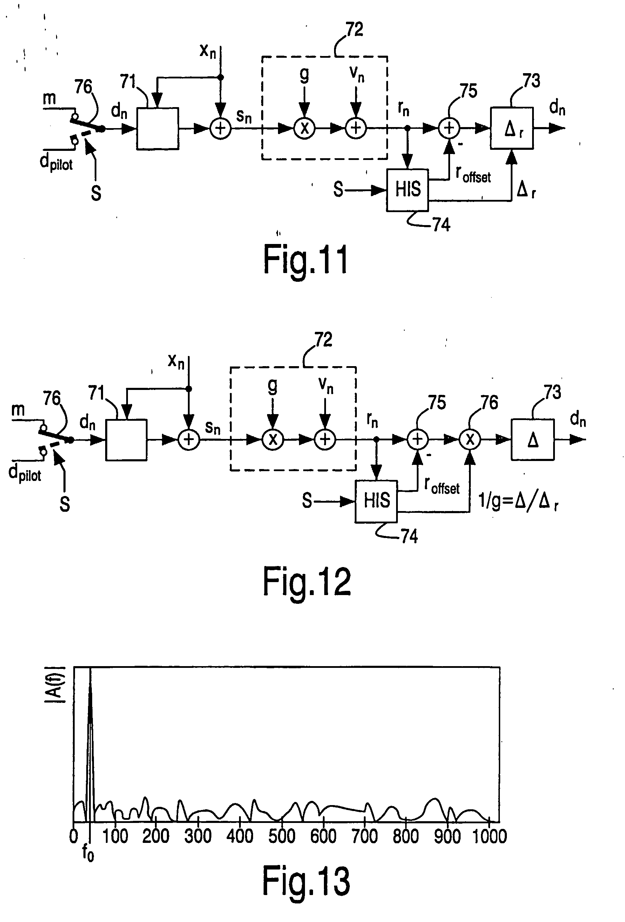

Fig. 11 shows a diagram of a system comprising an embedder and a receiver in accordance with the embodiments described above. Identical reference numerals are used to denote the same elements and functions as in Fig. 1. The receiver now includes a histogram analysis circuit **74** which receives the signal samples $r_n$ and computes the offset $r_{offset}$, if any, and the step size $\Delta_r$. The offset $r_{offset}$ is the same for all samples and is subtracted therefrom by a subtractor **75.** The computed step size $\Delta_r$ is directly applied to the detector **73** which reconstructs the embedded data symbols $d_n$ in accordance with equations (6) and (7) and Fig. 5. The symbol $\Delta_r$ in detector **73** denotes that the step size $\Delta$ in equations (6) and (7) and Fig. 5 is to be replaced $\Delta_r$.

In case a pilot sequence is used, a selection signal S is applied to the histogram analysis circuit to identify the signal samples $r_n$ having the embedded pilot symbols $d_{pilot}$. At the transmitting end, a switch **76** being controlled by the same selection signal S is used to apply either a message symbol m or a pilot symbol $d_{pilot}$ to the embedder **71.**

The system shown in Fig. 12 includes a further embodiment of the receiver. In this embodiment, the watermarked signal is re-scaled, in a multiplication stage **76,** by multiplication with $g^{-1}=\Delta/\Delta_r$, where $\Delta$ is the step size being employed by detector **73.** The advantage of this embodiment is that the same detector **73** can be used for all amplitude scaling factors g. The step size $\Delta$ is not necessarily the original step size used by the embedder.

A practical embodiment of the histogram analysis circuit will now be described for application in the embodiment using a pilot sequence. It can be implemented in hardware or software. First, the whole range of sample values $r_{min} \leq r_n \leq r_{max}$ is divided into $L_{bin}$ bins. For each bin, the histograms $p_{r,m}(b)$ are computed, where $b \in \{0,1,...,L_{bin}-1\}$ is the bin index, and $m \in \{0,1,...,M-1\}$ indicates the considered range of key values $k_n$. For M=3, this will yield 3 "conditional" histograms per bin that resemble the histograms **100,101,** and **102** shown in Fig. 10. For each bin, the "total" histogram $p_r(b)$ (cf. **103** in Fig. 10) is computed too. Empty bins and bins that contain only a few samples are assigned a uniform non-zero histogram. The conditional histograms $p_{r,m}(b)$ are subsequently normalized, and the discrete Fourier spectrum $A_m(f)$ of each normalized histogram is computed in accordance with:

$$A_m(f) = DFT\left\{\frac{p_{r,m}(b)}{p_r(b)} - 1\right\}$$

For Gaussian distributed $r_n$, but also for other typical signal distributions, empty and almost empty bins occur mainly at the tails of the histograms. Therefore, it is useful to also weight the normalized histograms with a window function W(b) that gives a different weight to the tails. In that case, the Fourier spectra are computed in accordance with:

$$A_m(f) = DFT\left\{\frac{p_{r,m}(b) - p_r(b)}{p_r(b)} W(b)\right\}$$

All M spectra can be combined in an elegant way since it is known that the maxima in the different conditional histograms are shifted against each other by $\Delta_r/M$. This shift corresponds to a multiplication by $e^{-j\frac{2\pi}{M}m}$ in the Fourier domain so that the overall spectrum can be obtained as:

$$A(f) = \sum_{m=0}^{M-1} A_m(f)e^{-j\frac{2\pi}{M}m}$$

Fig. 13 shows an example of the modulus |A(f)| of the spectrum using a 1024-length discrete Fourier transform. A dominating peak at $f_0$ is clearly visible. The step size $\Delta_r$ follows from:

$$\Delta_r = \frac{L_{DFT}}{f_0} \frac{r_{max} - r_{min}}{L_{bin}}$$

where $L_{DFT}$ is the length of the discrete Fourier transform. The offset $r_{offset}$ can be derived from the argument arg $\{A(f_0)\}$ of the complex Fourier spectrum.

Disclosed are a method and arrangement for embedding data ($d_n$) in a host signal ($x_n$) using dithered quantization index modulation (71), and extracting said data from the watermarked signal. A problem of this embedding scheme (71) is that the amplitude of the watermarked signal ($s_n$) may have been scaled (72) unintentionally (by a communication channel) or intentionally (by a hacker). This causes the quantization step size ($\Delta_r$) of the received signal ($r_n$) to be unknown to the extractor (73) which is essential for reliable data extraction. The invention provides making a histogram (74) of those signal samples that have substantially the same amount of dither, and analyzing said histogram to derive an estimation of the step size ($\Delta_r$) therefrom. In a preferred embodiment, a pilot sequence of predetermined data symbols ($d_{pilot}$) is embedded (76) in selected (S) samples of the host signal.

**Claims**

1. A method of extracting data symbols ($d_n$) from a media signal ($r_n$), the data symbols being embedded in said media signal by quantization (40) of a host signal ($x_n$) using a quantization step size ($\delta$), modulating the quantization index

   $\left( \dfrac{x_n}{\delta} \right)$ with the data symbols and dithering of the quantized signal ($s_n$) in accordance with a dither vector ($k_n$),

   **characterized in that** the media signal ($r_n$) has embedded therein a pilot sequence of data symbols and that the method comprises the steps of estimating the quantizer step size ($\delta_r$) of the received media signal ($r_n$) from a histogram (74) of predetermined selected signal samples in which a predetermined data symbol ($d_{pilot}$) has been embedded, and using said estimated step size to extract the data symbols from the media signal.

2. A method as claimed in claim 1, wherein the quantizer step size is computed using a Fourier transform of the histogram.

3. A method of embedding data symbols in a host signal by quantizing said host signal ($x_n$) using a quantization step

   size ($\delta$), modulating the quantization index $\left( \dfrac{x_n}{\delta} \right)$ with the data symbols and dithering the quantized signal in accordance with a dither vector ($k_n$), **characterized in that** the method includes embedding (76) a predetermined pilot data symbol ($d_{pilot}$) only in predetermined selected samples of the host signal.

4. A system for extracting data symbols ($d_n$) from a media signal ($r_n$), the data symbols being embedded in said media signal by quantization (40) of a host signal ($x_n$) using a quantization step size ($\delta$), modulation of the quantization index with the data symbols, and dithering of the quantized signal in accordance with a dither vector ($k_n$), **characterized in that** the media signal ($r_n$) has embedded therein a pilot sequence of data symbols and that the arrangement includes means (74) for making a histogram of selected predetermined signal samples in which a predetermined data symbol ($d_{pilot}$) has been embedded, having a predetermined range of dither values, and computing the quantizer step size ($\delta_r$) of the received media signal ($r_n$) from said histogram.

5. A system for embedding data symbols in a host signal by quantizing (40) said host signal ($x_n$) using a quantization step size ($\delta$), modulating the quantization index with the data symbols, and dithering the quantized signal in accordance with a dither vector ($k_n$), **characterized in that** the arrangement includes means (76) for embedding a predetermined pilot data symbol ($d_{pilot}$) only in predetermined selected samples of the host signal.

6. A signal ($s_n$) with embedded data symbols, comprising signal samples obtained by quantization of a host signal ($x_n$) using a quantization step size ($\delta$), modulation of the quantization index with the data symbols, and dithering of the quantized signal in accordance with a dither vector ($k_n$), **characterized in that** the signal includes embedded predetermined pilot data symbols ($d_{pilot}$) only in predetermined selected samples of the host signal.

**Patentansprüche**

1. Verfahren zum Extrahieren von Datensymbolen ($d_n$) aus einem Mediasignal ($r_n$), wobei die Datensymbole durch Quantisierung (40) eines Gastgebersignals ($x_n$) unter Verwendung einer Quantisierungsschrittgröße ($\delta$), durch Modulation des Quantisierungsindexes $\dfrac{x_n}{\delta}$ mit den Datensymbolen und durch Schwankung des quantisierten Signals ($s_n$) entsprechend einem Schwankungsvektor ($k_n$) in das genannte Mediasignal eingebettet sind, **dadurch gekennzeichnet, dass** das Mediasignal ($r_n$) eine eingebettete Pilotsequenz von Datensymbolen aufweist und dass das Verfahren die nachfolgenden Verfahrensschritte umfasst: das Schätzen der Quantisierungsschrittgröße ($\delta_r$) des empfangenen Mediasignals ($r_n$) aus einem Histogramm (74) vorbestimmter selektierter Signalabtastwerte, in das ein vorbestimmtes Datensymbol ($d_{pilot}$) eingebettet worden ist, und das Verwenden der genannten geschätzten Schrittgröße zum Extrahieren der Datensymbole aus dem Mediasignal.

2. Verfahren nach Anspruch 1, wobei die Quantisierungsschrittgröße unter Anwendung der Fourier-Transformation des Histogramms berechnet wird.

3. Verfahren zum Einbetten von Datensymbolen in ein Gastgebersignal durch Quantisierung des genannten Gastgebersignals ($x_n$) unter Verwendung einer Quantisierungsschrittgröße ($\delta$), durch Modulation des Quantisierungsindexes $\dfrac{x_n}{\delta}$ mit den Datensymbolen und durch Schwankung des quantisierten Signals ($s_n$) entsprechend einem Schwankungsvektor ($k_n$), **dadurch gekennzeichnet, dass** das Verfahren die nachfolgenden Verfahrensschritte umfasst: das Einbetten (76) eines vorbestimmten Pilotdatensymbols ($d_{pilot}$) nur in vorbestimmte selektierte Abtastwerte des Gastgebersignals.

4. System zum Extrahieren von Datensymbolen ($d_n$) aus einem Mediasignal ($r_n$), wobei die Datensymbole durch Quantisierung (40) eines Gastgebersignals ($x_n$) unter Anwendung einer Quantisierungsschrittgröße ($\delta$), durch Modulation des Quantisierungsindexes mit den Datensymbolen, und durch Schwankung des quantisierten Signals entsprechend einem Schwankungsvektor ($k_n$) in das genannte Mediasignal eingebettet werden, **dadurch gekennzeichnet, dass** das Mediasignal ($r_n$) eine eingebettete Pilotsequenz von Mediasymbolen aufweist und dass die Anordnung Mittel (74) aufweist zum Herstellen eines Histogramms selektierter vorbestimmter Signalabtastwerte, in das ein vorbestimmtes Datensymbol ($d_{pilot}$) eingebettet worden ist, mit einem vorbestimmten Bereich von Schwankungswerten, und Mittel aufweist zum Berechnen der Quantisierungsschrittgröße ($\delta_r$) des empfangenen Mediasignals ($r_n$) aus dem genannten Histogramm.

5. System zum Einbetten von Datensymbolen in ein Gastgebersignal durch Quantisierung (40) des genannten Gastgebersignals ($x_n$) unter Anwendung einer Quantisierungsschrittgröße ($\delta$), durch Modulation des Quantisierungsindexes mit den Datensymbolen und durch Schwankung des quantisierten Signals entsprechend einem Schwankungsvektor ($k_n$),
**dadurch gekennzeichnet, dass** die Anordnung Mittel (76) aufweist zum Einbetten eines vorbestimmten Pilotdatensymbols ($d_{pilot}$) nur in vorbestimmte selektierte Abtastwerte des Gastgebersignals.

6. Signal ($s_n$) mit eingebetteten Datensymbolen, mit Signalabtastwerten, erhalten durch Quantisierung eines Gastgebersignals ($x_n$) unter Anwendung einer Quantisierungsschrittgröße ($\delta$), durch Modulation des Quantisierungsindexes mit den Datensymbolen, und durch Schwankung des quantisierten Signals entsprechend einem Schwankungsvektors ($k_n$), **dadurch gekennzeichnet, dass** das Signal eingebettete vorbestimmte Pilotdatensymbole ($d_{pilot}$) aufweist, und zwar nur in vorbestimmten selektierten Abtastwerten des Gastgebersignals.

**Revendications**

1. Procédé pour extraire des symboles de données (d$_n$) d'un signal média (r$_n$), les symboles de données étant enfouis dans ledit signal média par quantification (40) d'un signal hôte (x$_n$) utilisant une taille de pas (δ) de quantification, modulant l'indice de quantification $\left(\dfrac{x_n}{\delta}\right)$ avec les symboles de données et en tramant le signal quantifié (s$_n$) suivant un vecteur de tramage (k$_n$), **caractérisé en ce que** le signal média (r$_n$) y a enfoui une séquence pilote de symboles de données et que le procédé comprend les étapes d'estimation de la taille de pas (δ$_r$) du quantificateur à partir signal média (r$_n$) reçu à partir d'un histogramme (74) d'échantillons prédéterminés sélectionnés du signal dans lesquels un symbole pilote prédéterminé de données (d$_{pilot}$) a été enfoui, et utilisant ladite taille de pas pour extraire les symboles de données du signal média.

2. Procédé selon la revendication 1, dans lequel la taille de pas du quantificateur est calculée en utilisant une transformée de Fourier de l'histogramme.

3. Procédé d'enfouissement de symboles de données dans un signal hôte en quantifiant ledit signal hôte (x$_n$) en utilisant une taille de pas (δ) de quantification, en modulant l'indice de quantification $\left(\dfrac{x_n}{\delta}\right)$ avec les symboles de données et en tramant le signal quantifié suivant un vecteur de tramage (k$_n$), **caractérisé en ce que** le procédé inclut l'enfouissement (76) d'un symbole de données pilote prédéterminé (d$_{pilot}$) seulement dans des échantillons prédéterminés sélectionnés du signal hôte.

4. Système pour extraire des symboles de données (d$_n$) d'un signal média (r$_n$), les symboles de données étant enfouis dans ledit signal média par quantification (40) d'un signal hôte (x$_n$) en utilisant une taille de pas de quantification (δ), en modulant l'indice de quantification avec les symboles de données, et en tramant le signal quantifié suivant un vecteur de tramage (k$_n$), **caractérisé en ce que** le signal média (r$_n$) a enfoui dedans une séquence pilote de symboles de données et que l'agencement inclut des moyens (74) pour faire un histogramme d'échantillons prédéterminés sélectionnés dans lesquels un symbole de données (d$_{pilot}$) prédéterminé a été enfoui, en ayant une plage prédéterminée de valeurs de tramage, et en calculant la taille de pas (δ$_r$) du quantificateur à partir du signal média (r$_n$) reçu dudit histogramme.

5. Système pour enfouir des symboles de données dans un signal hôte en quantifiant (40) ledit signal hôte (x$_n$) en utilisant une taille de pas de quantification (δ), en modulant l'indice de quantification avec les symboles de données, et en tramant le signal quantifié suivant un vecteur de tramage (k$_n$), **caractérisé en ce que** l'agencement inclut des moyens (76) pour enfouir un symbole de données pilote prédéterminé (d$_{pilot}$) seulement dans des échantillons prédéterminés sélectionnés du signal hôte.

6. Signal (s$_n$) avec des symboles de données enfouis, comprenant des échantillons de signal obtenus par quantification d'un signal hôte (x$_n$) en utilisant une taille de pas de quantification (δ), en modulant l'indice de quantification avec les symboles de données, et en tramant le signal quantifié suivant un vecteur de tramage (k$_n$), **caractérisé en ce que** le signal inclut des symboles de données pilote prédéterminés (d$_{pilot}$) enfouis seulement dans des échantillons prédéterminés sélectionnés du signal hôte.

Fig.1

Fig.2

Fig.3

Fig.4

Fig.5

Fig.6

Fig.7A

Fig.7B

Fig.8

14

0 1 0 1 0 1 0 1 0 1 0 1 0

## Fig.9

## Fig.10

Fig.11

Fig.12

Fig.13